# EUROPEAN PATENT SPECIFICATION

(11) **EP 2 509 070 B1**
(45) Date of publication and mention of the grant of the patent: **02.11.2016**
(21) Application number: 12162896.0
(22) Date of filing: 02.04.2012
(51) Int. Cl.: G10L 25/78, G10L 15/25, G06F 3/16, A63F 13/00

(54) **Apparatus and method for determining relevance of input speech**
Vorrichtung und Verfahren zur Bestimmung der Relevanz der Spracheingabe
Appareil et procédé pour déterminer la pertinence d'une saisie vocale

(30) Priority: 08.04.2011 US 201113083356
(43) Date of publication of application: 10.10.2012
(73) Proprietor: Sony Interactive Entertainment Inc., Tokyo 108-0075 (JP)
(72) Inventor: Kalinli, Ozlem, Minato-ku, Tokyo 108-0075 (JP)
(74) Representative: D Young & Co LLP

(56) References cited:
- US-A1- 2002 135 618
- US-A1- 2003 018 475
- US-A1- 2007 016 426
- US-B1- 6 243 683
- US-B1- 7 117 157

## Description

### FIELD OF THE INVENTION

Embodiments of the present invention are related to determination of the relevance of speech input in a computer program that includes speech recognition feature.

### BACKGROUND OF THE INVENTION

Many user-controlled programs use some form of speech recognition to facilitate interaction between the user and the program. Examples of programs implementing some form of speech recognition include: GPS systems, smart phone applications, computer programs, and video games. Often times, these speech recognition systems process all speech captured during operation of the program, regardless of the speech's relevance. For example, a GPS system that implements speech recognition may be configured to perform certain tasks when it recognizes specific commands made by the speaker. However, determining whether a given voice input (i.e., speech) constitutes a command requires the system to process every voice input made by the speaker.

Processing every voice input places a heavy workload on system resources, leading to overall inefficiency and a limited supply of hardware resource availability for other functions. Moreover, recovering from processing an irrelevant voice input is both difficult and time consuming for speech recognition systems. Likewise, having to process many irrelevant voice inputs in addition to relevant ones may cause confusion for the speech recognition system, leading to greater inaccuracy.

One prior art method for reducing the total voice inputs needed to be processed during operation of a given speech recognition system involves implementing push-to-talk. Push-to-talk gives the user control over when the speech recognition system captures voice inputs for processing. For example, a speech recognition system may employ a microphone to capture voice inputs. The user would then control the on/off functionality of the microphone (e.g., user presses a button to indicate that he is speaking a command to the system). While this does work to limit the amount of irrelevant voice inputs processed by the speech recognition system, it does so by burdening the user with having to control yet another aspect of the system.

It is within this context that embodiments of the present invention arise.

Various respective aspects and features of the invention are defined in the appended claims. Features of the dependent claims may be combined in any combination, not just those indicated by the claim dependencies.

US 2003/0018475 A1 describes a method and apparatus for audio-visual speech detection and recognition.

US 7117157 B2 describes a processing apparatus for determining which person in a group is speaking.

US 2002/0135618 A1 describes a system and method for multi-modal focus detection, referential ambiguity resolution and mood classification using multi-modal input.

US 2007/0016426 A1 describes an audio-visual control system.

US 6243683 B1 describes video control of speech recognition.

### BRIEF DESCRIPTION OF THE DRAWINGS

Embodiments of the invention will now be described, by way of example only, with reference to the accompanying drawings in which:
FIG. 1A is a flow/schematic diagram illustrating a method for determining relevance of speech of a user according to an embodiment of the present invention.
FIGs. 1B-1I are schematic diagrams illustrating examples of the use of eye gaze and face tracking in conjunction with embodiments of the present invention.
FIG. 2A-D are schematic diagrams illustrating facial orientation characteristic tracking setups according to embodiments of the present invention.
FIG. 2E is a schematic diagram illustrating a portable device that can utilize facial orientation tracking according to an embodiment of the present invention.
FIG. 3 is a block diagram illustrating an apparatus for determining relevance of speech of a user according to an embodiment of the present invention.
FIG. 4 is a block diagram illustrating an example of a cell processor implementation of an apparatus for determining relevance of speech of a user according to an embodiment of the present invention.
FIG. 5 illustrates an example of a non-transitory computer-readable storage medium with instructions for implementing determination of relevance of input speech according to an embodiment of the present invention.

### DESCRIPTION OF THE SPECIFIC EMBODIMENTS

The need for determining speech relevance arises when a user's speech acts as a control input for a given program. For example, this may occur in the context of a karaoke-type video game, where a user attempts to replicate the lyrics and melodies of popular songs. The program (game) will usually process all speech emanating from the user's mouth regardless of the user's intentions. Thus, speech intended to be used as a control input and speech not intended to be used as a control input will both be processed in the same manner. This leads to greater computational complexity and system inefficiency because irrelevant speech is being processed rather than discarded. This may also lead to reduced accuracy in program performance caused by the introduction of noisy voice inputs (i.e., irrelevant speech).

In embodiments of the present invention the relevancy of a given voice input may be determined without relying on a user's deliberate or conscious control over the capturing of speech. The relevance of a user's voice input may be characterized based on certain detectable cues that are given unconsciously by a speaker during speech. For example, the direction of the speaker's speech and the direction of the speaker's sight during speech may both provide tell-tale signs as to who or what is the target of the speaker's voice.

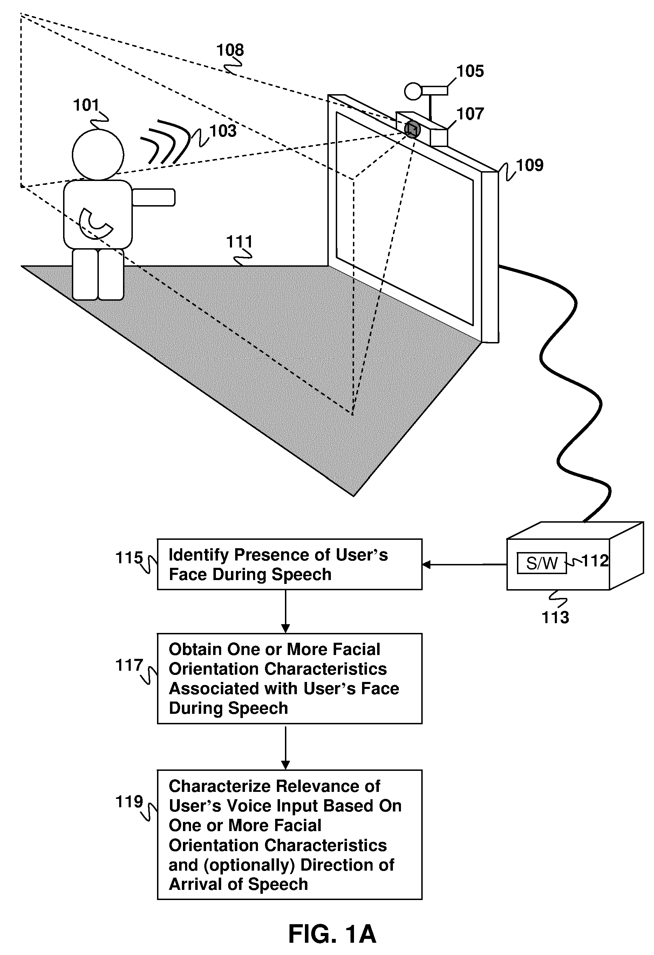

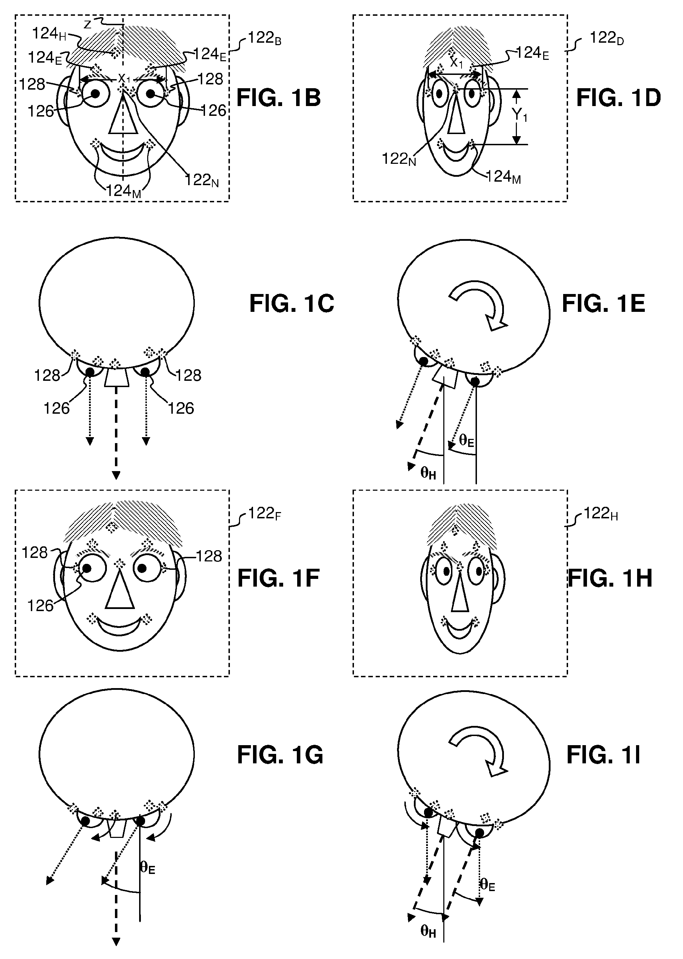

FIG. 1 is a schematic/flow diagram illustrating a method for determining relevance of voice inputs (i.e. speech) of a user according to an embodiment of the present invention. A user **101** may provide input to a program **112** being run on a processor **113** by using his speech **103** as a control input. The terms speech and voice input will be used interchangeably hereinafter to describe a user's auditory output in any situation. The processor **113** may be connected to a visual display **109,** an image capture device **107** such as a digital camera, and microphone **105** to facilitate communication with a user **101.** The visual display **109** may be configured to display content associated with the program running on the processor **113.** The camera **107** may be configured to track certain facial orientation characteristics associated with the user **101** during speech. Likewise, the microphone **105** may be configured to capture the user's speech **103.**

In embodiments of the present invention, whenever a user **101** engages in speech **103** during operation of the program, the processor **113** will seek to determine the relevance of that speech/voice input. By way of example, and not by way of limitation, the processor **113** can first analyze one or more images from the camera **107** to identify the presence of the user's face within an active area **111** associated with a program as indicated at **115.** This may be accomplished, e.g., by using suitably configured image analysis software to track the location of the user **101** within a field of view **108** of the camera **107** and to identify the user's face within the field of view during some interval of time. According to the invention, the microphone **105** includes a microphone array having two or more separate-spaced apart microphones. In such cases, the processor **113** may be programmed with software capable of identifying the location of a source of sound, e.g., the user's voice. Such software may utilize direction of arrival (DOA) estimation techniques, such as beamforming, time delay of arrival estimation, frequency difference of arrival estimation etc., to determine the direction of a sound source relative to the microphone array. Such methods may be used to establish a listening zone for the microphone array that approximately corresponds to the field of view **108** of the camera **107.** The processor can be configured to filter out sounds originating outside the listening zone. Some examples of such methods are described e.g., in commonly assigned U.S. Patent 7,783,061, commonly assigned U.S. Patent 7,809,145, and commonly-assigned U.S. Patent Application Publication number 2006/0239471.

By way of example, and not by way of limitation, if the speech **103** originates from a location outside the field of view **108,** the user's face will not be present and the speech **103** may be automatically characterized as being irrelevant and discarded before processing. If, however, the speech 103 originates from a location within the active area 111 (e.g., within the field of view 108 of the camera 107), the processor 113 may continue on to the next step in determining the relevancy of the user's speech.

Once the presence of the user's face has been identified, one or more facial orientation characteristics associated with the user's face during speech can be obtained during the interval of time as indicated at 117. Again, suitably configured image analysis software may be used to analyze one or more images of the user's face to determine the facial orientation characteristics. By way of example, and not by way of limitation, one of these facial orientation characteristics may be a user's head tilt angle. The user's head tilt angle refers to the angular displacement between a user's face during speech and a face that is directed exactly at the specified target (e.g., visual display, camera, etc.). The user's head tilt angle may refer to the vertical angular displacement, horizontal angular displacement, or a combination of the two. A user's head tilt angle provides information regarding his intent during speech. In most situations, a user will directly face his target when speaking, and as such the head tilt angle at which the user is speaking will help determine who/what the target of his speech is.

In addition to head tilt angle, another facial orientation characteristic that may be associated with the user's speech is his eye gaze direction. The user's eye gaze direction refers to the direction in which the user's eyes are facing during speech. A user's eye gaze direction may also provide information regarding his intent during speech. In most situations, a user will make eye contact with his target when speaking, and as such the user's eye gaze direction during speech will help determine who/what the target of his speech is.

These facial orientation characteristics may be tracked with one or more cameras and a microphone connected to the processor. More detailed explanations of examples of facial orientation characteristic tracking systems are provided below. In order to aid the system in obtaining facial orientation characteristics of a user, the program may initially require a user to register his facial profile prior to accessing the contents of the program. This gives the processor a baseline facial profile to compare future facial orientation characteristics to, which will ultimately result in a more accurate facial tracking process.

After facial orientation characteristics associated with a user's speech have been obtained, the relevancy of the user's speech may be characterized according to those facial orientation characteristics as indicated at **119.** By way of example, and not by way of limitation, a user's speech may be characterized as irrelevant where one or more of the facial orientation characteristics obtained falls outside of an allowed range. For example, a program may set a maximum allowable head tilt angle of 45°, and so any speech made outside of a 45° head tilt angle will be characterized as irrelevant and discarded prior to processing. Similarly, the program may set a maximum angle of divergence from a specified target of 10° for the user's eye gaze direction, and so any speech made outside of a 10° divergent eye gaze direction will be characterized as irrelevant and discarded prior to processing. Relevance may also be characterized based on a combination of facial orientation characteristics. For example, speech made by a user whose head tilt angle falls outside of an allowed range, but whose eye gaze direction falls within the maximum angle of divergence may be characterized as relevant or speech made by a user whose head looks straight to the target, but whose eye gaze direction falls outside of the maximum angle of divergence may be characterized as irrelevant.

In addition to facial characteristics, embodiments of the invention also take into account a direction of a source of speech in determining relevance of the speech at **119.** Specifically, a microphone array is used in conjunction with beamforming software to determine a direction of the source of speech **103** with respect to the microphone array. The beamforming software may also be used in conjunction with the microphone array and/or camera to determine a direction of the user with respect to the microphone array. If the two directions are very different, the software running on the processor may assign a relatively low relevance to the speech **103.** Such embodiments may be useful for filtering out sounds originating from sources other than a relevant source, such as the user **101.** It is noted that embodiments described herein can also work when there are multiple sources of speech in a scene captured by a camera (but only one is producing speech). As such, embodiments of the present invention are not limited to implementations in the user is the only source of speech in an image captured by the camera **107.** Specifically, determining relevance of the speech at **119** may include discriminating among a plurality of sources of speech within an image captured by the image capture device **107.**

In addition, the embodiments described herein can also work when there are multiple sources of speech captured by a microphone array (e.g., when multiple people are speaking) but only one source (e.g., the relevant user) is located within the field of view of the camera **107.** Then the speech of user within the field of view can be detected as relevant. The microphone array can be used to steer and extract the sound only coming from the sound source located by the camera in the field of view. The processor **113** can implement a source separation algorithm with a priori information of the relevant user's location to extract relevant speech from the input to the microphone array. From another point of view, it can be also said that, speech coming from the sources outside of the field of view is considered irrelevant and ignored.

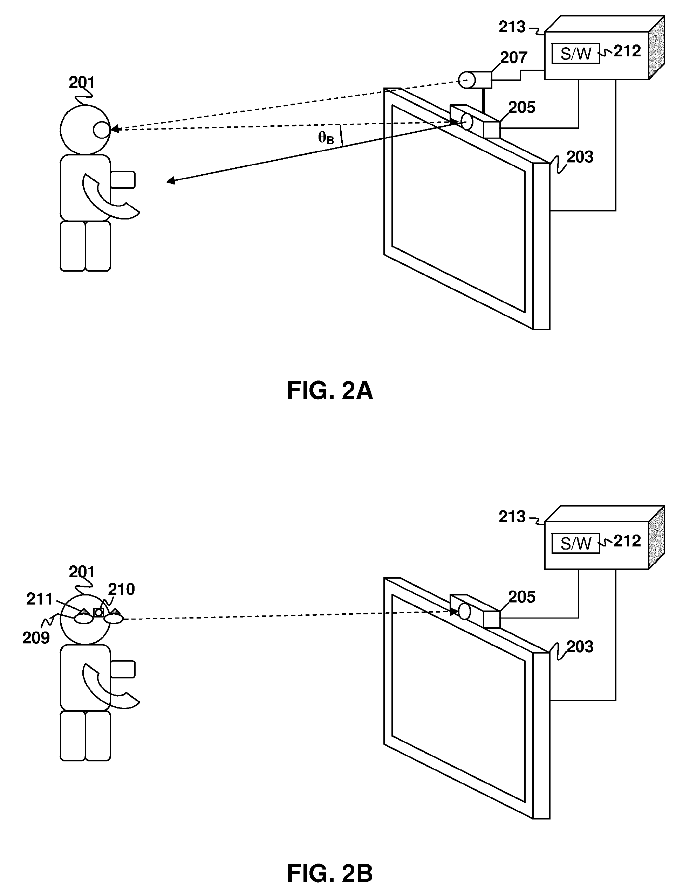

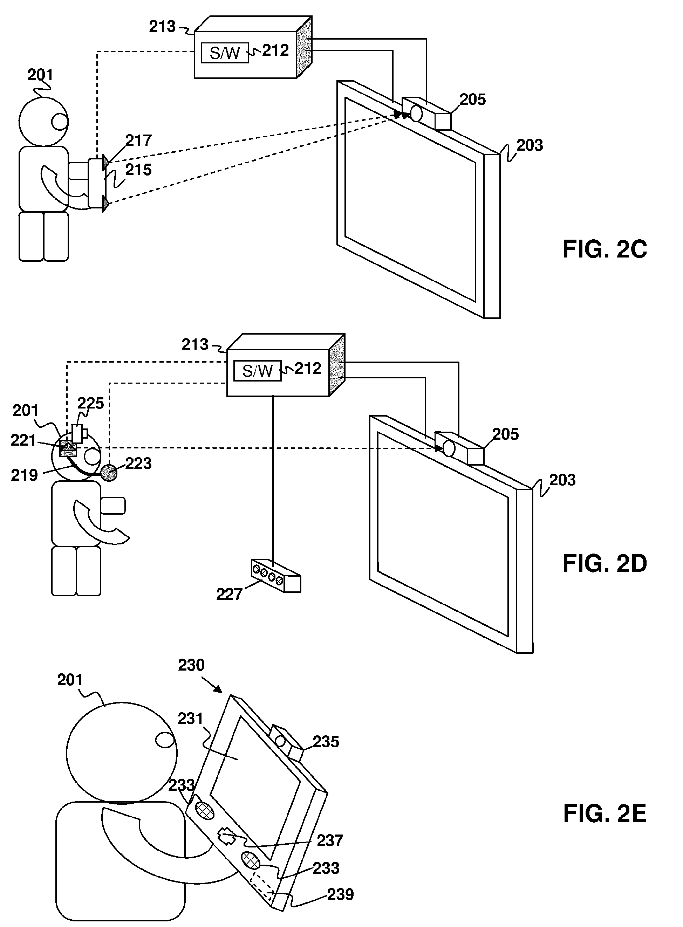

Each application/platform can decide relevance of speech based on extracted visual features (e.g., head tilt, eye gaze direction, etc) and acoustic features (e.g., localization information such as direction of arrival of sound, etc). For example, some applications/platforms may be stricter (i.e. hand-held devices like cell-phones, tablet PCs, or portable game devices, e.g., as shown in FIG. 2E) whereas some others may be less strict in terms of allowed deviation from the target (i.e. living room set-up with TV display as in Fig 2A). In addition, data collected from subjects can be used to learn the mapping between these audio-visual features and relevance of speech using a machine learning algorithm such as decision trees, neural network etc., to make a better decision. According to the invention, instead of binary decision of relevant/irrelevant decision, a soft decision is used in the system such that a likelihood score (i.e. a number between [0, 1]; 0 being irrelevant, 1 being relevant) estimated based on extracted audio-visual features is sent to the speech recognition engine for weighting input speech frames. For example, a user's speech may grow less relevant as the user's head tilt angle increases. Similarly, the user's speech may grow less relevant as the user's eye gaze direction grows more divergent from the specified target. Thus, the weighted relevance of a user's speech can be used to determine how that speech is further processed or discarded prior to further processing.

By weighing the relevance of detected user speech prior to speech recognition processing, a system may save considerable hardware resources as well as improve the overall accuracy of speech recognition. Discarding irrelevant voice inputs decreases the workload of the processor and eliminates confusion involved with processing extraneous speech.

FIGs. 1B-1I illustrate examples of the use of facial orientation and eye gaze direction to determine the relevance of detected speech. As seen in FIG. 1B a face **120** of the user **101** may appear in an image **122_{B}.** Image analysis software may identify reference points on the face **120.** The software may characterize certain of these reference points, e.g., located at the corners of the mouth **124_{M},** the bridge of the nose **124_{N},** the part in the hair **124_{H},** and at the tops of the eyebrows **124_{E},** as being substantially fixed relative to the face 120. The software may also identify the pupils **126** and corners **128** of the user's eyes as reference points and determine the location of the pupils relative to the corners of the eyes. In some implementations, the centers of the user's eyes can be estimated from the locations of the pupils **126** and corners **128** of eyes. Then, the centers of eyes can be estimated and the locations of pupils can be compared with the estimated locations of the centers. In some implementations, face symmetry properties can be used.

The software can determine the user's facial characteristics, e.g., head tilt angle and eye gaze angle from analysis of the relative locations of the reference points and pupils **126.** For example, the software may initialize the reference points **124_{E}, 124_{H}, 124_{M}, 124_{N}, 128** by having the user look straight at the camera and register the locations of the reference points and pupils **126** as initial values. The software can then initialize the head tilt and eye gaze angles to zero for these initial values. Subsequently, whenever the user looks straight ahead at the camera, as in FIG. 1B and the corresponding top view shown in FIG. 1C, the reference points **124_{E}, 124_{H}, 124_{M}, 124_{N}, 128** and pupils **126** should be at or near their initial values. The software may assign a high relevance to user speech when the head tilt and eye gaze angles are close to their initial values.

By way of example and not by way of limitation, the pose of a user's head may be estimated using five reference points, the outside corners **128** of each of the eyes, the outside corners **124_{M}** of the mouth, and the tip of the nose (not shown). A facial symmetry axis may be found by connecting a line between a midpoint of the eyes (e.g., halfway between the eyes' outside corners **128)** and a midpoint of the mouth (e.g., halfway between the mouth's outside corners **124_{M}**). A facial direction can be determined under weak-perspective geometry from a 3D angle of the nose. Alternatively, the same five points can be used to determine the head pose from the normal to the plane, which can be found from planar skew-symmetry and a coarse estimate of the nose position. Further details of estimation of head pose can be found, e.g., in "Head Pose Estimation in Computer Vision: A Survey" by Erik Murphy, in IEEE TRANSACTIONS ON PATTERN ANALYSIS AND MACHINE INTELLIGENCE, Vol. 31, No. 4, April 2009, pp 607-626. Other examples of head pose estimation that can be used in conjunction with embodiments of the present invention are described in "Facial feature extraction and pose determination", by Athanasios Nikolaidis Pattern Recognition, Vol. 33 (July 7, 2000) pp. 1783-1791. Additional examples of head pose estimation that can be used in conjunction with embodiments of the present invention are described in "An Algorithm for Real-time Stereo Vision Implementation of Head Pose and Gaze Direction Measurement", by Yoshio Matsumoto and Alexander Zelinsky in FG'00 Proceedings of the Fourth IEEE International Conference on Automatic Face and Gesture Recognition, 2000, pp 499-505. Further examples of head pose estimation that can be used in conjunction with embodiments of the present invention are described in "3D Face Pose Estimation from a Monocular Camera" by Qiang Ji and Ruong Hu in Image and Vision Computing, Vol. 20, Issue 7, 20 February, 2002, pp 499-511.

When the user tilts his head, the relative distances between the reference points in the image **122** may change depending upon the tilt angle. For example, if the user pivots his head to the right or left, about a vertical axis Z the horizontal distance **x₁** between the corners **128** of the eyes may decrease, as shown in the image **122_{D}** depicted in FIG. 1D. Other reference points may also work, or be easier to detect, depending on the particular head pose estimation algorithm being used. The amount change in the distance can be correlated to an angle of pivot **θ_{H}** as shown in the corresponding top view in FIG. 1E. It is noted that if the pivot is purely about the **Z** axis the vertical distance **Y₁** between, say, the reference point at the bridge of the nose **124_{N}** and the reference points at the corners of the mouth **124_{M},** would not be expected to change significantly. However, it would be reasonably expected for this distance **y₁** to change if the user were to tilt his head upwards or downwards. It is further noted that the software may take the head pivot angle **θ_{H}** into account when determining the locations of the pupils **126** relative to the corners **128** of the eyes for gaze direction estimation. Alternatively the software may take the locations of the pupils **126** relative to the corners **128** of the eyes into account when determining head pivot angle **θ_{H}**. Such an implementation might be advantageous if gaze prediction is easier, e.g., with an infrared light source on a hand-held device, the pupils could be located relatively easily. In the example, shown in FIG. 1D and FIG. 1E, the user's eye gaze angle **θ_{E}** is more or less aligned with the user's head tilt angle. However, because of the pivoting of the user's head and the three-dimensional nature of the shape of the eyeballs, the positions of the pupils **126** will appear slightly shifted in the image **122_{D}** compared to their positions in the initial image **122_{B}**. The software may assign a relevance to user speech based on whether the head tilt angle **θ_{H}** and eye gaze angle **θ_{E}** are within some suitable range, e.g., close to their initial values, where the user is facing the camera or within some suitable range where the user **101** is facing the microphone **105.**

In some situations, the user **101** may be facing the camera, but the user's eye gaze is directed elsewhere, e.g., as shown in FIG. 1F and the corresponding top view in FIG. 1G. In this example, the user's head is tilt angle **θ_{H}** is zero but the eye gaze angle **θ_{E}** is not. Instead, the user's eyeballs are rotated counterclockwise, as seen in FIG. 1G. Consequently, the reference points **124_{E}, 124_{H}, 124_{M}, 124_{N}, 128** are arranged as in FIG. 1B, but the pupils **126** are shifted to the left in the image **122_{F}.** The program **112** may take this configuration of the user's face into account in determining whether any speech coming from the user **101** should be interpreted or can be ignored. For example, if the user is facing the microphone but looking away from it or looking at the microphone but facing away from it, the program **112** may assign a relatively lower probability to the likelihood that the user's speech should be recognized than if the user were both looking at the microphone and facing it.

It is noted that the user's head may pivot in one direction and the user's eyeballs may pivot in another direction. For example, as illustrated in FIG. 1H and FIG. 1I, the user **101** may pivot his head clockwise and rotate his eyeballs counterclockwise. Consequently, the reference points **124_{E}, 124_{H}, 124_{M}, 124_{N}, 128** are shifted as in FIG. 1E, but the pupils **126** are shifted to the right in the image **122_{H}** shown in FIG. 1H. The program **112** may take this configuration into account in determining whether any speech coming from the user **101** should be interpreted or can be ignored.

As may be seen from the foregoing discussion it is possible to track certain user facial orientation characteristics using just a camera. However, many alternative forms of facial orientation characteristic tracking setups could also be used. FIGs. 2A-E illustrate examples of five facial orientation characteristic tracking systems that, among other possible systems, can be implemented according to embodiments of the present invention.

In FIG. 2A, the user **201** is facing a camera **205** and infrared light sensor **207,** which are mounted on top of a visual display **203.** To track the user's head tilt angle, the camera **205** may be configured to perform object segmentation (i.e., track user's separate body parts) and then estimate the user's head tilt angle from the information obtained. The camera **205** and infrared light sensor **207** are coupled to a processor **213** running software **213,** which may be configured as described above. By way of example, and not by way of limitation, object segmentation may be accomplished using a motion model to describe how the image of a target might change in accordance to different possible movements of the object. It is noted that embodiments of the present invention may use more than one camera, for example, some implementations may use two cameras. One camera can provide a zoomed-out image of the field of view to locate the user, and a second camera can zoom-in and focus on the user's face to provide a close-up image for better head and gaze direction estimation.

A user's eye gaze direction may also be acquired using this setup. By way of example, and not by way of limitation, infrared light may be initially directed towards the user's eyes from the infrared light sensor **207** and the reflection captured by the camera **205.** The information extracted from the reflected infrared light will allow a processor coupled to the camera **205** to determine an amount of eye rotation for the user. Video based eye trackers typically use the corneal reflection and the center of the pupil as features to track over time.

Thus, FIG. 2A illustrates a facial orientation characteristic tracking setup that is configured to track both the user's head tilt angle and eye gaze direction in accordance with an embodiment of the present invention. It is noted that, for the purposes of example, it has been assumed that the user is straight across from the display and camera. However, embodiments of the invention can be implemented even if the user is not straight across from the display **203** and/or camera **205.** For example, the user **201** can be +45° or -45° to the right/left of display. As long as the user **201** is within field of view of the camera **205,** the head angle **θ_{H}** and eye gaze **θ_{E}** can be estimated. Then, a normalized angle can be computed as a function of the location of user **201** with respect to the display **203** and/or camera **205** (e.g. body angle **θ_{B}** as shown in FIG. 2A), the head angle **θ_{H}** and eye gaze **θ_{E}**. For example, if the normalized angle is within allowed range, then speech can be accepted as relevant. By way of example and not by way of limitation, if the user **201,** is located such that the body angle **θ_{B}** is +45° and if the head is turned at an angle **θ_{H}** of -45°, the user **201** is fixing the deviation of the body from the display **203** by turning his head, and this is almost as good as having the person looking straight at the display. Specifically, if, e.g., the user's gaze angle **θ_{E}** is zero (i.e., the user's pupil's are centered), the normalized angle (e.g., **θ_{B}+θ_{H}+ θ_{E}**) is zero. The normalized angle as a function of head, body and gaze can be compared against a predetermined range to decide if speech is relevant.

FIG. 2B provides another facial orientation characteristic tracking setup. In FIG. 2B, the user **201** is facing a camera **205** mounted on top of a visual display **203.** The user **201** is simultaneously wearing a pair of glasses **209** (e.g., a pair of 3D shutter glasses) with a pair of spaced-apart infrared (IR) light sources **211** (e.g., one IR LED on each lens of the glasses **209**). The camera **205** may be configured to capture the infrared light emanating from the light sources **211,** and then triangulate user's head tilt angle from the information obtained. Because the position of the light sources **211** will not vary significantly with respect to its position on the user's face, this setup will provide a relatively accurate estimation of the user's head tilt angle.

The glasses **209** may additionally include a camera **210** which can provide images to the processor **213** that can be used in conjunction with the software **212** to find the location of the visual display **203** or to estimate the size of the visual display **203.** Gathering this information allows the system to normalize the user's facial orientation characteristic data so that calculation of those characteristics is independent of both the absolute locations of the display **203** and the user **201.** Moreover, the addition of the camera will allow the system to more accurately estimate visible range. Thus, FIG. 2B illustrates an alternative setup for determining a user's head tilt angle according to an embodiment of the present invention. In some embodiments, separate cameras may be mounted to each lens of the glasses **209** facing toward the user's eyes to facilitate gaze tracking by obtaining images of the eyes showing the relative location of the pupil with respect to the centers or corners of the eyes. The relatively fixed position of the glasses **209** relative to the user's eyes facilitates tracking the user's eye gaze angle θ_{E} independent of tracking of the user's head orientation θ_{H}.

FIG. 2C provides a third facial orientation characteristic tracking setup. In FIG. 2C, the user **201** is facing a camera **205** mounted on top of a visual display **203.** The user is also holding a controller **215** with one or more cameras **217** (e.g., one on each side) configured to facilitate interaction between the user **201** and the contents on the visual display **203.**

The camera **217** may be configured to find the location of the visual display **203** or to estimate the size of the visual display **203.** Gathering this information allows the system to normalize the user's facial orientation characteristic data so that calculation of those characteristics is independent of both the absolute locations of the display **203** and the user **201.** Moreover, the addition of the cameras **217** to the controller **215** allows the system to more accurately estimate visible range.

It is important to note that the setup in FIG. 2C may be further combined with the setup in FIG. 2A (not shown in diagram) in order to track the user's eye gaze direction in addition to tracking the user's head tilt angle while making the system independent of display size and location. Because the user's eyes are unobstructed in this setup, his eye gaze direction may be obtained through the infrared light reflection and capturing process discussed above.

FIG. 2D provides yet another alternative facial orientation characteristic tracking setup. In FIG. 2D, the user **201** is facing a camera **205** mounted on top of a visual display **203.** The user **201** is also wearing a headset **219** with infrared light sources **221** (e.g., one on each earpiece) and a microphone **223,** the headset **219** being configured to facilitate interaction between the user **201** and the contents on the visual display **203.** Much like the setup in FIG. 2B, the camera **205** may capture the infrared light paths emanating from the light sources **221** on the headset **219,** and then triangulate the user's head tilt angle from the information obtained. Because the position of the headset **219** tends not to vary significantly with respect to its position on the user's face, this setup can provide a relatively accurate estimation of the user's head tilt angle.

In addition to tracking the user's head tilt angle using the infrared light sensors **221,** the position of the user's head with respect to a specified target may also be tracked by a separate microphone array **227** that is not part of the headset **219.** The microphone array **227** may be configured to facilitate determination of a magnitude and orientation of the user's speech, e.g., using suitably configured software **212** running on the processor **213.** Examples of such methods are described e.g., in commonly assigned U.S. Patent 7,783,061, commonly assigned U.S. Patent 7,809,145, and commonly-assigned U.S. Patent Application Publication number 2006/0239471.

A detailed explanation of directional tracking of a user's speech using thermographic information may be found in U.S. Patent Application Number 12/889,347, to Ruxin Chen and Steven Osman filed September 23, 2010 entitled "BLOW TRACKING USER INTERFACE SYSTEM AND METHOD", (Attorney Docket No. SCEA10042US00-I). By way of example, and not by way of limitation, the orientation of the user's speech can be determined using a thermal imaging camera to detect vibration patterns in the air around the user's mouth that correspond to the sounds of the user's voice during speech. A time evolution of the vibration patterns can be analyzed to determine a vector corresponding to a generalized direction of the user's speech.

Using both the position of the microphone array **227** with respect to the camera **205** and the direction of the user's speech with respect to the microphone array **227,** the position of the user's head with respect to a specified target (e.g., display) may be calculated. To achieve greater accuracy in establishing a user's head tilt angle, the infrared reflection and directional tracking methods for determining head tilt angle may be combined.

The headset **219** may additionally include a camera **225** configured to find the location of the visual display **203** or to estimate the size of the visual display **203.** Gathering this information allows the system to normalize the user's facial orientation characteristic data so that calculation of those characteristics is independent of both the absolute locations of the display **203** and the user **201.** Moreover, the addition of the camera will allow the system to more accurately estimate visible range. In some embodiments, one or more cameras **225** may be mounted to the headset **219** facing toward the user's eyes to facilitate gaze tracking by obtaining images of the eyes showing the relative location of the pupil with respect to the centers or corners of the eyes. The relatively fixed position of the headset **219** (and therefore, the camera(s) **225)** relative to the user's eyes facilitates tracking the user's eye gaze angle θ_{E} independent of tracking of the user's head orientation θ_{H}.

It is important to note that the setup in FIG. 2D may be combined with the setup in FIG. 2A (not shown in diagram) in order to track the user's eye gaze direction in addition to tracking the user's head tilt angle. Because the user's eyes are unobstructed in this setup, his eye gaze direction may be obtained through infrared light reflection and capturing process discussed above.

Embodiments of the present invention can also be implemented in hand-held devices, such as cell phones, tablet computers, personal digital assistants, portable internet devices, or portable game devices, among other examples. FIG. 2E illustrates one possible example of determining the relevance of speech in the context of a hand-held device **230.** The device **230** generally includes a processor **239** which can be programmed with suitable software, e.g., as described above. The device **230** may include a display screen **231** and camera **235** coupled to the processor **239.** One or more microphones **233** and control switches **237** may also be optionally coupled the processor **239.** The microphone **233** may be part of a microphone array. The control switches **237** can be of any type normally used with the particular type of hand-held device. For example, if the device **230** is a cell phone, the control switches **237** may include a numeric keypad or alpha-numeric keypad commonly used in such device. Alternatively, if the device **230** is a portable game unit, the control switches **237** may include digital or analog joysticks, digital control switches, triggers, and the like. In some embodiments, the display screen **231** may be a touch screen interface and the functions of the control switches **237** may be implemented by the touch screen in conjunction with suitable software, hardware or firmware. The camera **235** may be configured to face the user **201** when the user looks at the display screen **231.** The processor **239** may be programmed with software to implement head pose tracking and/or eye-gaze tracking. The processor may be further configured to utilize head pose tracking and/or eye-gaze tracking information in determining the relevance of speech detected by the microphone(s) **233,** e.g., as discussed above.

It is noted that the display screen **231,** microphone(s) **233,** camera **235,** control switches **237** and processor **239** may be mounted to a case that can be easily held in a user's hand or hands. In some embodiments, the device **230** may operate in conjunction with a pair of specialized glasses, which may have features in common with the glasses **209** shown in FIG. 2B and described hereinabove. Such glasses may communicate with the processor through a wireless or wired connection, e.g., a personal area network connection, such as a Bluetooth network connection. In some embodiments, the device **230** may be used in conjunction with a headset, which can have features in common with the headset **219** shown in FIG. 2D and described hereinabove. Such a headset may communicate with the processor through a wireless or wired connection, e.g., a personal area network connection, such as a Bluetooth network connection. The device **230** may include suitable antenna and transceiver to facilitate wireless network connection.

It is noted that the examples depicted in FIGs. 2A-2E are only a few examples of many setups that could be used to track a user's facial orientation characteristics during speech in embodiments of the present invention. Similarly, various body and other facial orientation characteristics in addition to the head tilt angle and eye gaze direction described above may be tracked to facilitate the characterization of relevancy of a user's speech.

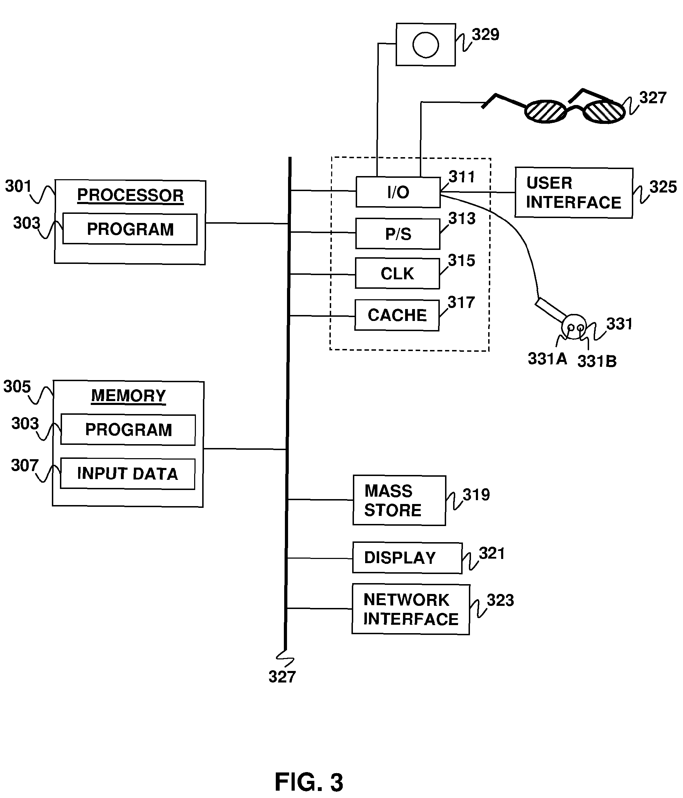

FIG. 3 illustrates a block diagram of a computer apparatus that may be used to implement a method for detecting irrelevant speech of a user according to an embodiment of the present invention. The apparatus **300** generally may include a processor module **301** and a memory **305.** The processor module **301** may include one or more processor cores including, e.g., a central processor and one or more co-processors, to facilitate parallel processing.

The memory **305** may be in the form of an integrated circuit, e.g., RAM, DRAM, ROM, and the like. The memory **305** may also be a main memory that is accessible by all of the processor modules. In some embodiments, the processor module **301** may be a multi-core processor having separate local memories correspondingly associated with each core. A program **303** may be stored in the main memory **305** in the form of processor readable instructions that can be executed on the processor modules. The program **303** may be configured to perform estimation of relevance of voice inputs of a user. The program **303** may be written in any suitable processor readable language, e.g., C, C++, JAVA, Assembly, MATLAB, FORTRAN, and a number of other languages. The program 303 may implement face tracking and gaze tracking, e.g., as described above with respect to FIGs. 1A-1I.

Input data **307** may also be stored in the memory. Such input data **307** may include head tilt angles, eye gaze direction, or any other facial orientation characteristics associated with the user. Alternatively, the input data **307** can be in the form of a digitized video signal from a camera and/or a digitized audio signal from one or more microphones. The program **303** can use such data to compute head tilt angle and/or eye gaze direction. During execution of the program **303,** portions of program code and/or data may be loaded into the memory or the local stores of processor cores for parallel processing by multiple processor cores.

The apparatus **300** may also include well-known support functions **309,** such as input/output (I/O) elements **311,** power supplies (P/S) **313,** a clock (CLK) **315,** and a cache **317.** The apparatus **300** may optionally include a mass storage device **319** such as a disk drive, CD-ROM drive, tape drive, or the like to store programs and/or data. The device **300** may optionally include a display unit **321** and user interface unit **325** to facilitate interaction between the apparatus and a user. The display unit **321** may be in the form of a cathode ray tube (CRT) or flat panel screen that displays text, numerals, graphical symbols, or images. By way of example, and not by way of limitation, the display unit **321** may be in the form of a 3-D ready television set that displays text, numerals, graphical symbols or other visual objects as stereoscopic images to be perceived with a pair of 3-D viewing glasses **327,** which can be coupled to the I/O elements **311.** Stereoscopy refers to the enhancement of the illusion of depth in a two-dimensional image by presenting a slightly different image to each eye. As noted above, light sources or a camera may be mounted to the glasses **327.** In some embodiments, separate cameras may be mounted to each lens of the glasses **327** facing the user's eyes to facilitate gaze tracking by obtaining images of the eyes showing the relative location of the pupil with respect to the centers or the corners of the eyes.

The user interface **325** may include a keyboard, mouse, joystick, light pen, or other device that may be used in conjunction with a graphical user interface (GUI). The apparatus **300** may also include a network interface **323** to enable the device to communicate with other devices over a network, such as the internet.

According to the invention, the system includes a camera **329.** The camera **329** can be coupled to the processor 301 via the I/O elements **311.** As mentioned above, the camera **329** may be configured to track certain facial orientation characteristics associated with a given user during speech.

According to the invention, the system also includes a microphone **331,** which, in examples, may be a single microphone but according to the invention is a microphone array having two or more microphones **331A, 331B** that can be spaced apart from each other by some known distance. The microphone **331** can be coupled to the processor **301** via the I/O elements **311.** As discussed above, the microphone **331** may be configured to track direction of a given user's speech.

The components of the system **300,** including the processor **301,** memory **305,** support functions **309,** mass storage device **319,** user interface **325,** network interface **323,** and display **321** may be operably connected to each other via one or more data buses **327.** These components may be implemented in hardware, software, firmware, or some combination of two or more of these.

There are a number of additional ways to streamline parallel processing with multiple processors in the apparatus. For example, it is possible to "unroll" processing loops, e.g., by replicating code on two or more processor cores and having each processor core implement the code to process a different piece of data. Such an implementation may avoid a latency associated with setting up the loop. As applied to our invention, multiple processors could determine relevance of voice inputs from multiple users in parallel. Each user's facial orientation characteristics during speech could be obtained in parallel, and the characterization of relevancy for each user's speech could also be performed in parallel. The ability to process data in parallel saves valuable processing time, leading to a more efficient and streamlined system for detection of irrelevant voice inputs.

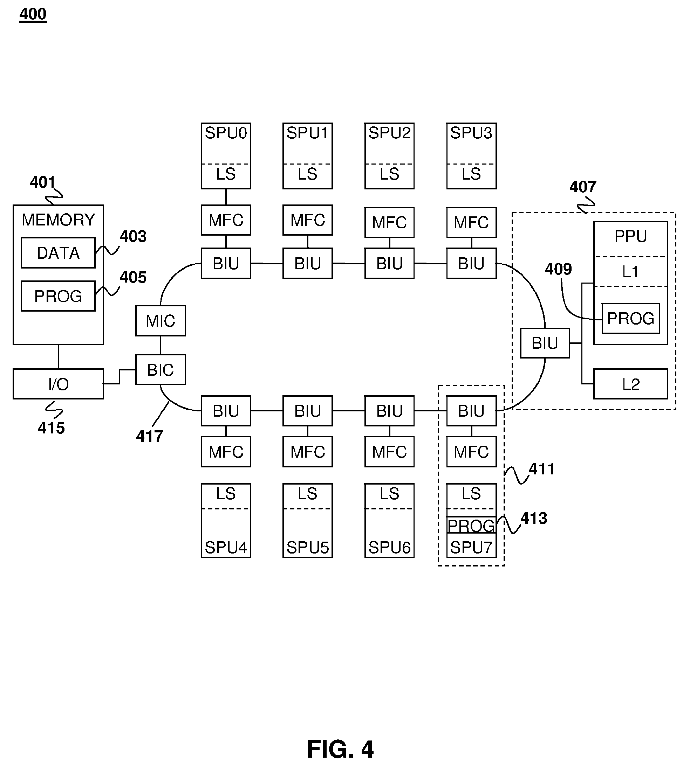

One example, among others of a processing system capable of implementing parallel processing on two or more processor elements is known as a cell processor. There are a number of different processor architectures that may be categorized as cell processors. By way of example, and without limitation, FIG. 4 illustrates a type of cell processor architecture. In this example, the cell processor **400** includes a main memory **401,** a single power processor element (PPE) **407,** and eight synergistic processor elements (SPE) **411.** Alternatively, the cell processor may be configured with any number of SPEs. With respect to FIG. 4, the memory **401,** PPE **407** and SPEs **411** can communicate with each other and with an I/O device **415** over a ring-type element interconnect bus **417.** The memory **401** contains input data **403** having features in common with the input data described above and a program **405** having features in common with the program described above. At least one of the SPEs **411** may include in its local store (LS) speech relevance estimation instructions **413** and/or a portion of the input data that is to be processed in parallel, e.g., as described above. The PPE **407** may include in its L1 cache, determining relevance of voice input instructions **409** having features in common with the program described above. Instructions **405** and data **403** may also be stored in memory **401** for access by the SPE **411** and PPE **407** when needed.

By way of example, the PPE **407** may be a 64-bit PowerPC Processor Unit (PPU) with associated caches. The PPE **407** may include an optional vector multimedia extension unit. Each SPE **411** includes a synergistic processor unit (SPU) and a local store (LS). In some implementations, the local store may have a capacity of e.g., about 256 kilobytes of memory for programs and data. The SPUs are less complex computational units than the PPU, in that they typically do not perform system management functions. The SPUs may have a single instruction, multiple data (SIMD) capability and typically process data and initiate any required data transfers (subject to access properties set up by a PPE) in order to perform their allocated tasks. The SPUs allow the system to implement applications that require a higher computational unit density and can effectively use the provided instruction set. A significant number of SPUs in a system, managed by the PPE allows for cost-effective processing over a wide range of applications. By way of example, the cell processor may be characterized by an architecture known as Cell Broadband Engine Architecture (CBEA). In CBEA-compliant architecture, multiple PPEs may be combined into a PPE group and multiple SPEs may be combined into an SPE group. For purposes of example, the cell processor is depicted as having only a single SPE group and a single PPE group with a single SPE and a single PPE. Alternatively, a cell processor can include multiple groups of power processor elements (PPE groups) and multiple groups of synergistic processor elements (SPE groups). CBEA-compliant processors are described in detail, e.g., in Cell Broadband Engine Architecture, which is available online at: http://www-306.ibm.com/chips/techlib/techlib.nsf/techdocs/1AEEE1270EA277638725706000E61BA/$file/ CBEA_01_pub.pdf.

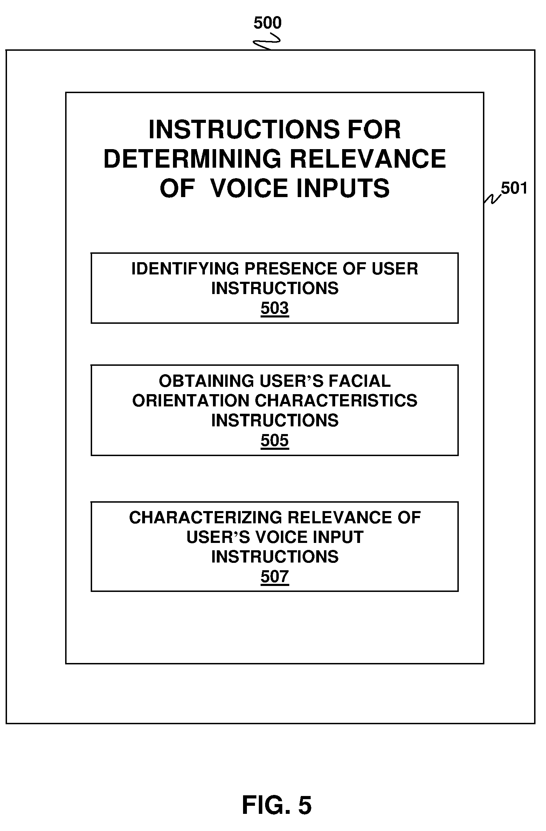

According to another embodiment, instructions for determining relevance of voice inputs may be stored in a computer readable storage medium. By way of example, and not by way of limitation, FIG. 5 illustrates an example of a non-transitory computer readable storage medium **500** in accordance with an embodiment of the present invention. The storage medium **500** contains computer-readable instructions stored in a format that can be retrieved, interpreted, and executed by a computer processing device. By way of example, and not by way of limitation, the computer-readable storage medium **500** may be a computer-readable memory, such as random access memory (RAM) or read only memory (ROM), a computer readable storage disk for a fixed disk drive (e.g., a hard disk drive), or a removable disk drive. In addition, the computer-readable storage medium **500** may be a flash memory device, a computer-readable tape, a CD-ROM, a DVD-ROM, a Blu-Ray, HD-DVD, UMD, or other optical storage medium.

The storage medium **500** contains determining relevance of voice input instructions **501** configured to facilitate estimation of relevance of voice inputs. The determining relevance of voice input instructions **501** may be configured to implement determination of relevance of voice inputs in accordance with the method described above with respect to FIG. 1. In particular, the determining relevance of voice input instructions **501** may include identifying presence of user instructions **503** that are used to identify whether speech is coming from a person positioned within an active area. If the speech is coming from a person positioned outside of the active area, it is immediately characterized as irrelevant, as discussed above.

The determining relevance of voice input instructions **501** may also include obtaining user's facial orientation characteristics instructions **505** that are used to obtain certain facial orientation characteristics of a user (or users) during speech. These facial orientation characteristics act as cues to help determine whether a user's speech is directed at a specified target. By way of example, and not by way of limitation, these facial orientation characteristics may include a user's head tilt angle and eye gaze direction, as discussed above.

The determining relevance of voice input instructions **501** may also include characterizing relevancy of user's voice input instructions **507** that are used to characterize the relevancy of a user's speech based on his audio (i.e. direction of speech) and visual (i.e. facial orientation) characteristics. A user's speech may be characterized as irrelevant where one or more of the facial orientation characteristics fall outside an allowed range. Alternatively, the relevancy of a user's speech may be weighted according to each facial orientation characteristic's divergence from an allowed range.

In so far as embodiments of the invention are or may be implemented, at least in part, by software-controlled data processing apparatus, it will be appreciated that such software and a storage or transmission medium by which such software may be provided are envisaged as embodiments of the present invention. This includes software which, when executed by a computer, causes the computer to implement the method described with reference to Figure 1A, for example.

In embodiments of the invention, obtaining the one or more orientation characteristics in the claimed step b) involves tracking the user's facial orientation characteristics using a microphone.

While the above is a complete description of the preferred embodiment of the present invention, it is possible to use various alternatives, modifications, and equivalents. Therefore, the scope of the present invention should be determined not with reference to the above description, but should, instead, be determined with reference to the appended claims. Any feature described herein, whether preferred or not, may be combined with any other feature described herein, whether preferred or not. In the claims that follow, the indefinite article "A" or "An" refers to a quantity of one or more of the item following the article, except where expressly stated otherwise. The appended claims are not to be interpreted as including means-plus-function limitations, unless such a limitation is explicitly received in a given claim using the phrase "means for".

## Claims

1. A method for determining relevance of input speech, comprising:
a) identifying (115) the presence of the user's face during speech in an interval of time;
b) obtaining (117) one or more facial orientation characteristics associated with the user's face during the interval of time by tracking the user's facial orientation characteristics using a camera (107); and
c) characterizing (119) a relevance of the speech during the interval of time based on the one or more orientation characteristics obtained in b);
further comprising determining a direction of a source of the speech with respect to a microphone array using the microphone array (105) in conjunction with beamforming software and wherein c) includes taking the direction of the source of speech in characterizing the relevance of the speech,
wherein c) includes estimating a likelihood score as a soft decision based on a combination of the obtained facial orientation characteristics and the determined direction of a source of speech, the likelihood score being a number between 0 and 1, 0 being irrelevant and 1 being relevant, sent to a speech recognition engine for weighting input speech frames.

2. The method of claim 1, wherein obtaining the one or more facial orientation characteristics in b) further involves tracking the user's facial orientation characteristics using infrared lights (211).

3. The method of claim 1, wherein the one or more facial orientation characteristics in b) includes a head tilt angle (θ_{H}).

4. The method of claim 1, wherein the one or more facial orientation characteristics in b) includes an eye gaze direction (θ_{E}).

5. The method of claim 1, wherein c) involves characterizing the user's speech as irrelevant where one or more of the facial orientation characteristics fall outside an allowed range.

6. The method of claim 1, wherein c) involves weighing the relevance of the user's speech based on one or more of the facial orientation characteristics' divergence from an allowed range.

7. The method of claim 1, further comprising registering a profile of the user's face prior to obtaining one or more facial orientation characteristics associated with the user's face during speech.

8. The method of claim 1, wherein c) includes discriminating among a plurality of sources of speech within an image captured by an image capture device.

9. An apparatus for determining relevance of speech, comprising:
a processor (301);
a memory (305);
a camera (329);
a microphone array (331); and
computer coded instructions (303) embodied in the memory and executable by the processor, wherein the computer coded instructions are configured to implement a method for determining relevance of speech of a user, comprising:
a) identifying the presence of the user's face during speech in an interval of time;
b) obtaining one or more facial orientation characteristics associated with the user's face during speech during the interval of time by tracking the user's facial orientation characteristics using the camera; and
c) characterizing the relevance of the user's speech during the interval of time based on the one or more orientation characteristics obtained in b)
further comprising determining a direction of a source of the speech with respect to a microphone array using the microphone array in conjunction with beamforming software and wherein c) includes taking the direction of the source of speech in characterizing the relevance of the speech,
wherein c) includes estimating a likelihood score as a soft decision based on a combination of the obtained facial orientation characteristics and the determined direction of a source of speech, the likelihood score being a number between 0 and 1, 0 being irrelevant and 1 being relevant, sent to a speech recognition engine for weighting input speech frames.

10. The apparatus of claim 9, further comprising one or more infrared lights configured to obtain the one or more orientation characteristics in b).

11. Computer software which is configured to, when executed by a computer, cause the computer to implement the method of claim 1.

## Patentansprüche

1. Verfahren zum Bestimmen der Relevanz von eingegebener Sprache, das Folgendes umfasst:
a) Identifizieren (115) des Vorhandenseins des Anwendergesichts während des Sprechens in einem Zeitintervall;
b) Erhalten (117) einer oder mehrerer Gesichts-Orientierungscharakteristiken, die dem Anwendergesicht zugeordnet sind, während des Zeitintervalls durch Verfolgen der Anwendergesicht-Orientierungscharakteristiken unter Verwendung einer Kamera (107); und
c) Charakterisieren (119) einer Relevanz der Sprache während des Zeitintervalls anhand der einen oder der mehreren Orientierungscharakteristiken, die in b) erhalten werden;
ferner umfassend das Bestimmen einer Richtung der Quelle der Sprache in Bezug auf eine Mikrofonanordnung unter Verwendung der Mikrofonanordnung (105) in Verbindung mit einer Strahlformungs-Software, wobei c) das Verwenden der Richtung der Sprachquelle bei der Charakterisierung der Relevanz der Sprache umfasst,
wobei c) das Schätzen eines Wahrscheinlichkeitsschwellenwerts einer Soft-Entscheidung anhand einer Kombination der erhaltenen Gesichts-Orientierungscharakteristiken und der bestimmten Richtung einer Sprachquelle umfasst, wobei der Wahrscheinlichkeitsschwellenwert eine Zahl zwischen 0 und 1 ist, wobei 0 irrelevant ist und 1 relevant ist, die zu einer Spracherkennungsmaschine gesendet wird, um Eingangssprachrahmen zu gewichten.

2. Verfahren nach Anspruch 1, wobei das Erhalten der einen oder der mehreren Gesichts-Orientierungscharakteristiken in b) ferner das Verfolgen der Anwendergesichts-Orientierungscharakteristiken unter Verwendung von Infrarotlicht (211) umfasst.

3. Verfahren nach Anspruch 1, wobei die eine oder die mehreren Gesichts-Orientierungscharakteristiken in b) einen Neigungswinkel (θ_{H}) des Kopfes enthalten.

4. Verfahren nach Anspruch 1, wobei die eine oder die mehreren Gesichts-Orientierungscharakteristiken in b) eine Blickrichtung (θ_{E}) der Augen enthalten.

5. Verfahren nach Anspruch 1, wobei c) das Charakterisieren der Anwendersprache als irrelevant umfasst, wenn eine oder mehrere der Gesichts-Orientierungscharakteristiken außerhalb eines zulässigen Bereichs liegen.

6. Verfahren nach Anspruch 1, wobei c) das Gewichten der Relevanz der Anwendersprache anhand einer Abweichung einer oder mehrerer der Gesichts-Orientierungscharakteristiken von einem zulässigen Bereich umfasst.

7. Verfahren nach Anspruch 1, das ferner das Aufzeichnen eines Profils des Anwendergesichts umfasst, bevor eine oder mehrere Gesichts-Orientierungscharakteristiken, die dem Anwendergesicht zugeordnet sind, während des Sprechens erhalten werden.

8. Verfahren nach Anspruch 1, wobei c) das Unterscheiden zwischen mehreren Sprachquellen in einem Bild, das durch eine Bildaufnahmevorrichtung aufgenommen worden ist, umfasst.

9. Vorrichtung zum Bestimmen der Relevanz von Sprache, die Folgendes umfasst:
einen Prozessor (301);
einen Speicher (305);
eine Kamera (329);
eine Mikrofonanordnung (331); und
computercodierte Befehle (303), die im Speicher verkörpert sind und durch den Prozessor abgearbeitet werden können, wobei die computercodierten Befehle konfiguriert sind, ein Verfahren zum Bestimmen der Relevanz von Sprache eines Anwenders zu implementieren, das Folgendes umfasst:
a) Identifizieren des Vorhandenseins des Anwendergesichts während des Sprechens in einem Zeitintervall;
b) Erhalten einer oder mehrerer Gesichts-Orientierungscharakteristiken, die dem Anwendergesicht zugeordnet sind, während des Sprechens während des Zeitintervalls durch Verfolgen der Anwendergesichts-Orientierungscharakteristiken unter Verwendung der Kamera; und
c) Charakterisieren der Relevanz der Anwendersprache während des Zeitintervalls anhand der einen oder der mehreren Orientierungscharakteristiken, die in b) erhalten werden,
ferner umfassend das Bestimmen einer Richtung einer Quelle der Sprache in Bezug auf eine Mikrofonanordnung unter Verwendung der Mikrofonanordnung in Verbindung mit Strahlformungs-Software, wobei c) das Verwenden der Richtung der Sprachquelle bei der Charakterisierung der Relevanz der Sprache umfasst,
wobei c) das Schätzen eines Wahrscheinlichkeitsschwellenwerts als eine Soft-Entscheidung anhand einer Kombination der erhaltenen Gesichts-Orientierungscharakteristiken und der bestimmten Richtung einer Sprachquelle umfasst, wobei der Wahrscheinlichkeitsschwellenwert eine Zahl zwischen 0 und 1 ist, wobei 0 irrelevant ist und 1 relevant ist, die zu einer Spracherkennungsmaschine geschickt wird, um Eingangssprachrahmen zu gewichten.

10. Vorrichtung nach Anspruch 9, die ferner ein oder mehrere Infrarotlichtstrahlen umfasst, die konfiguriert sind, die eine oder die mehreren Orientierungscharakteristiken in b) zu erhalten.

11. Computersoftware, die konfiguriert ist, dann, wenn sie durch einen Computer abgearbeitet wird, den Computer zu veranlassen, das Verfahren nach Anspruch 1 zu implementieren.

## Revendications

1. Procédé de détermination de la pertinence d'une parole d'entrée, comprenant :
a) l'identification (115) de la présence du visage de l'utilisateur pendant la parole dans un intervalle de temps ;
b) l'obtention (117) d'une ou plusieurs caractéristiques d'orientation du visage associées au visage de l'utilisateur pendant l'intervalle de temps par suivi des caractéristiques d'orientation du visage de l'utilisateur au moyen d'une caméra (107) ; et
c) la caractérisation (119) d'une pertinence de la parole pendant l'intervalle de temps en fonction de la ou des caractéristiques d'orientation obtenues en b) ;
comprenant en outre la détermination d'une direction d'une source de la parole par rapport à un réseau de microphones au moyen du réseau de microphones (105) conjointement avec un logiciel de filtrage spatial, et dans lequel c) comporte la prise en compte de la direction de la source de parole dans la caractérisation de la pertinence de la parole,
dans lequel c) comporte l'estimation d'un score de probabilité en tant que décision pondérée basée sur une combinaison des caractéristiques d'orientation du visage obtenues et de la direction déterminée d'une source de parole, le score de probabilité étant un nombre entre 0 et 1, 0 étant non pertinent et 1 étant pertinent, envoyé à un moteur de reconnaissance vocale pour la pondération de trames de parole d'entrée.

2. Procédé de la revendication 1, dans lequel l'obtention de la ou des caractéristiques d'orientation du visage en b) implique en outre le suivi des caractéristiques d'orientation du visage de l'utilisateur au moyen de lumières infrarouges (211).

3. Procédé de la revendication 1, dans lequel la ou les caractéristiques d'orientation du visage en b) comportent un angle d'inclinaison de la tête (θ_{H}).

4. Procédé de la revendication 1, dans lequel la ou les caractéristiques d'orientation du visage en b) comporte une direction du regard (θ_{E}).

5. Procédé de la revendication 1, dans lequel c) implique la caractérisation de la parole de l'utilisateur comme non pertinente quand une ou plusieurs des caractéristiques d'orientation du visage se situent à l'extérieur d'une gamme autorisée.

6. Procédé de la revendication 1, dans lequel c) implique la pondération de la pertinence de la parole de l'utilisateur en fonction de la divergence d'une ou plusieurs des caractéristiques d'orientation du visage par rapport à une gamme autorisée.

7. Procédé de la revendication 1, comprenant en outre l'enregistrement d'un profil du visage de l'utilisateur avant l'obtention d'une ou plusieurs caractéristiques d'orientation du visage associées au visage de l'utilisateur pendant la parole.

8. Procédé de la revendication 1, dans lequel c) implique une distinction entre une pluralité de sources de parole à l'intérieur d'une image capturée par un dispositif de capture d'images.

9. Appareil destiné à déterminer la pertinence d'une parole, comprenant :
un processeur (301) ;
une mémoire (305) ;
une caméra (329) ;
un réseau de microphones (331) ; et
des instructions informatiques codées (303) contenues dans la mémoire et exécutables par le processeur, les instructions informatiques codées étant configurées pour mettre en oeuvre un procédé destiné à déterminer la pertinence de la parole d'un utilisateur, comprenant :
a) l'identification de la présence du visage de l'utilisateur pendant la parole dans un intervalle de temps ;
b) l'obtention d'une ou plusieurs caractéristiques d'orientation du visage associées au visage de l'utilisateur pendant la parole pendant l'intervalle de temps par suivi des caractéristiques d'orientation du visage de l'utilisateur au moyen d'une caméra ; et
c) la caractérisation de la pertinence de la parole de l'utilisateur pendant l'intervalle de temps en fonction de la ou des caractéristiques d'orientation obtenues en b) ;
comprenant en outre la détermination d'une direction d'une source de la parole par rapport à un réseau de microphones au moyen du réseau de microphones conjointement avec un logiciel de filtrage spatial, et dans lequel c) comporte la prise en compte de la direction de la source de parole dans la caractérisation de la pertinence de la parole,
dans lequel c) comporte l'estimation d'un score de probabilité en tant que décision pondérée basée sur une combinaison des caractéristiques d'orientation du visage obtenues et de la direction déterminée d'une source de parole, le score de probabilité étant un nombre entre 0 et 1, 0 étant non pertinent et 1 étant pertinent, envoyé à un moteur de reconnaissance vocale pour la pondération de trames de parole d'entrée.

10. Appareil de la revendication 9, comprenant en outre une ou plusieurs lumières infrarouges configurées pour obtenir la ou les caractéristiques d'orientation en b).

11. Logiciel informatique qui est configuré pour, lorsqu'il est exécuté par un ordinateur, amener l'ordinateur à mettre en oeuvre le procédé de la revendication 1.
